(19) Europäisches Patentamt
European Patent Office
Office européen des brevets

(11) **EP 4 123 132 A1**

(12) **EUROPEAN PATENT APPLICATION**

(43) Date of publication:
**25.01.2023  Bulletin 2023/04**

(51) International Patent Classification (IPC):
***F01N 3/20*** (2006.01)        ***F01N 9/00*** (2006.01)

(21) Application number: **21187181.9**

(22) Date of filing: **22.07.2021**

(52) Cooperative Patent Classification (CPC):
**F01N 3/208; F01N 9/00;** F01N 2560/08;
F01N 2610/01; F01N 2610/02; F01N 2610/144;
F01N 2610/146; F01N 2900/0416

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Beneda, Martin
  37816 Lomnice and Luznici (CZ)**
• **Pelikan, Petr
  37004 Ceské  Budejovice (CZ)**

(54) **METHOD FOR OPERATING A FLUID SUPPLY SYSTEM**

(57)    The invention relates to a method for operating a fluid supply system, said fluid supply system comprising a fluid tank, pumping means and a fluid dosing valve, comprising: operating said fluid supply system according to current values of operating parameters (P), in order to pump a fluid from said fluid tank to said fluid dosing valve and to dose said fluid, via said fluid dosing valve, into an exhaust gas system (170) of an engine, determining said current values of said operating parameters (P) based on a desired value (M) of a mass or mass flow of said fluid to be dosed into said exhaust gas system, correcting the desired value (M) of said mass or mass flow or a dosed value of said mass or mass flow by determining and applying a correction factor ($F_{corr,des}$), wherein determining said correction factor comprises the steps: determining (214) a density ($\overline{\rho_m}$) of said fluid, determining (206) a differential pressure ($\overline{\Delta p_m}$) between an internal pressure ($\overline{p_{int}}$) of said fluid supply system when said fluid dosing valve is open and an external pressure ($\overline{p_{ext}}$) of said exhaust gas system, and determining (230) said correction factor ($F_{corr,des}$) based on said density ($\overline{\rho_m}$) and on said differential pressure ($\overline{\Delta p_m}$).

Fig. 2

**Description**

The present invention relates to a method for operating a fluid supply system, and a processing unit and a computer program for its execution.

Background

In the after-treatment of exhaust gases in (motor) vehicles, the so-called SCR (Selective Catalytic Reduction) process can be used, in particular to reduce nitrogen oxides ($NO_x$). A urea-water solution is introduced into the typically oxygen-rich exhaust gas as a reducing agent solution. For this purpose, a dosing valve or dosing module can be used as a component of a fluid supply system, which includes a nozzle in order to spray or introduce the urea-water solution into the exhaust gas flow. Upstream of an SCR catalytic converter, the urea-water solution reacts to form ammonia, which then combines with the nitrogen oxides at the SCR catalytic converter, from which water and nitrogen are produced.

Summary

According to the invention, a method for operating a fluid supply system, and a processing unit and a computer program for its execution with the features of the independent claims are proposed. Advantageous further developments form the subject matter of the dependent claims and of the subsequent description.

The present invention relates to supplying fluid like a urea-water solution into an exhaust gas system of an engine, in particular using and operating a corresponding fluid supply system. Such fluid supply system typically comprises a tank for the fluid, a pump or pumping means (typically a diaphragm pump, it may be part of a supply unit) and the dosing valve or module. In addition, corresponding fluid supply (pressure) lines between the individual components are provided. In addition, a return line is usually connected to the tank, via which excess fluid or urea-water solution can be returned. An orifice or throttle in the return line can be provided to control the return flow.

The so-called SCR technology, as mentioned above, is based on the reaction of $NH_3$ with $NO_x$ and is common in diesel powered vehicles. As $NH_3$ is a hazardous component, a precursor called Diesel Exhaust Fluid (DEF) is dosed into the exhaust gas system. DEF typically consists of a solution of 32.5% urea in water with a melting point of -11°C (the urea-water solution mentioned before). The urea-water solution is stored in the tank, pumped to the dosing valve or module and sprayed into the exhaust gas flow where it is evaporated and transformed into gaseous $NH_3$.

With the outlooks the upcoming emission limits, efficiency of the exhaust treatment systems should be increased. In SCR context, regardless of the exhaust technology complexity (single/double SCR), this situation leads to the requirement of a more accurate and timely delivery (dosing) of the required amounts (mass) of fluid like urea-water solution. Insufficient dosing accuracy may lead to unacceptable $NO_x$ or $NH_3$ slips (albeit occasionally under challenging/transient working conditions).

A way to improve such efficiency is using current feedback to estimate the DEF temperature. Moreover, the DEF temperature increase between tank and dosing valve can be calculated. Such model is, however, very complex, and it requires application-specific calibration and testing. The reason for such complexity is low temperature stability of air-cooled dosing valves.

In view of this background, the present invention proposes a way to determine a correction factor to be applied to a desired or (actually) dosed mass (or mass flow) of fluid into the exhaust gas system by means of said fluid supply system, said way taking less computational effort.

The exhaust gas flow and its composition requires a specific mass or mass flow (which is mass per time) to be dosed into the exhaust gas system in order to achieve a good reaction. In other words, a desired mass or mass flow (i.e., a desired value of mass or mass flow) shall be dosed into the exhaust gas system. In order to provide a specific mass or mass flow of fluid to be introduced into the exhaust gas system, the fluid supply system, in particular the pump, has to be operated in a specific way, i.e, with specific values of operating parameters. For example, the pump has to be operated at a specific frequency for a specific time period. Such operating parameters depend on various further parameters like the specific fluid supply system characteristics, including lengths of supply lines, temperatures and so on.

For a desired mass or mass flow, the required operating parameters (or their values) are typically determined based on nominal values of various parameters (of the fluid supply system and other parameters like ambient parameters). Such nominal values can correspond to the values of a new fluid supply system at specific operating conditions like a specific temperature (e.g., 25°C) and a specific ambient pressure and the like. When operating the fluid supply system during vehicle operating, the actual values of these parameters typically do not correspond to the nominal values. Reasons are, e.g., deterioration or aging of components, and different ambient parameters like high or low ambient pressure and high or low ambient temperature.

Thus, the actual mass or mass flow of fluid dosed into the exhaust gas system differs from the desired value. This can be overcome by applying a correction factor. Such correction factor can either be applied to the desired value (of the mass or mass flow) or to the (actually) dosed value (of the mass or mass flow). If the correction factor is applied to the desired value, a corrected desired value is used to determine the operating parameters for the fluid supply system. For example, a desired mass of 5g fluid shall be dosed into the exhaust gas system; applying the correction factor to that desired value of 5g results in a corrected desired value of 5.5g. This means that the operating parameters will be determined such that (considering nominal situation) 5.5g of fluid were dosed into the exhaust gas system. Due to the actual situation differing from the nominal situation, only the desired 5g fluid will be dosed.

If the correction factor is applied to the dosed value, a corrected dosed value is achieved. For example, a desired mass of 5g fluid shall be dosed into the exhaust gas system. This means that the operating parameters will be determined such that (considering nominal situation) 5g of fluid were dosed into the exhaust gas system. Due to the actual situation differing from the nominal situation, only the 4.5g fluid will be dosed, what corresponds to the corrected dosed value. In this case, the missing mass of fluid can be added to the desired value in a next operating period.

Thus, the desired and/or dosed values of the mass or mass flow need to be corrected based on various parameters that influence it. Within the present invention, such correction is applied for, in particular, two main parameters. The density of said fluid (DEF) and a differential pressure of said fluid, in particular at the time of dosing valve opening, i.e., during a time period in which the dosing valve is open and introduces said fluid into the exhaust gas system. Said differential pressure is a pressure difference between an internal pressure of said fluid supply system when said dosing valve is open and an external pressure of said exhaust gas system. These values of density and/or differential pressure are, preferably, averaged over the time period in which the dosing valve is opened. The correction factor can then be determined or calculated based on average and nominal values of those parameters.

Fluid density is, in particular, determined or calculated based on a temperature of said fluid, in particular an average temperature over time. There are more parameters that have influence on fluid (DEF) temperature: fluid tank temperature, fluid quality (concentration of the urea in the solution), environmental or ambient temperature, coolant temperature (at the dosing valve), dosing valve tip temperature (analogous to upstream catalyst temperature), dosing mass flow rate, and so on. An exact mathematical model including all relevant factors, however, would require vehicle specific calibration. Therefore, a simplification of the model will be used. The fluid density is, preferably, calculated based on the most influencing factor, the fluid tank temperature. The precision of this calculation can be increased by including a fluid composition, in particular a concentration of urea in the solution. As not all typical vehicles are equipped with sensors for determining DEF quality (concentration), this is an advantageous embodiment.

Said differential pressure is calculated as a difference between external and internal pressure, preferably as an average value. The internal pressure can be measured by a fluid or urea pressure sensor. Such measured value can, in addition, be filtered and adjusted by adding an offset pressure caused by pressure losses between the position of the sensor and the dosing valve.

Determining the correction factor can be separated into several (in particular four) parts: determining (or modelling) of said (average) differential pressure, determining (or modelling) of said (average) fluid (DEF) temperature, determining (or modelling) of said (average) fluid density, and finally, determining the correction factor. In the following, index m will be used for a medium or fluid in general, while index DEF will be used for DEF as a fluid in particular.

First, determining (or modelling) of an average differential pressure over the time when the dosing valve is open will be explained in more detail. Such average differential pressure, $\overline{\Delta p_m}$, can be calculated based on the difference between an estimated internal relative pressure, $\overline{p_{int}}$, and external relative pressure, $\overline{p_{ext}}$, according to:

$$\overline{\Delta p_m} = \overline{p_{int}} - \overline{p_{ext}}.$$

The internal pressure, $\overline{p_{int}}$, can be estimated based on an actual measured system pressure, $p_{UPS}$, or a derivation of its filtered value $f(p_{UPS})$ and an expected drop or loss based on an opening request (inertia feedforward corrected duty cycle $UDV_{rPs}$), dependent on a stiffness ($Stfn$) of the fluid supply system. An additional pressure offset $p_{offset}$ can be considered in order to reflect the level (height) difference between the pressure sensor (UPS) and the dosing valve or module and (DV) (or injection point). This results in:

$$\overline{p_{int}} = f(p_{UPS}, UDV_{rPs}, Stfn) + p_{offset}$$

Potential long and unequal pressure signal propagation delays in the hydraulic lines or channels result in damping (pressure line compressible volume) and high volatility (mutual interference of upstream and downstream pressure waves), what would result in the above mentioned model winding up to be rather imprecise. It can, therefore, be simplified, while expecting the same inaccuracy, as follows:

$$\overline{p_{int}} = f(p_{UPS}) + p_{offset}$$

wherein $f(p_{UPS})$ is a filtered value, filtered e.g. with a PT1 filter. Preferably, the measured DEF pressure should be filtered for spikes and drops. PT1 can be chosen, as it is easy to apply in Software. The time constant $\tau$ (tau) of the PT1 filter allows effective averaging over the entire dosing period (for example: 2 (ln2) $\tau$ = ti$_{Per}$/2). This corresponds to a calculation of the time ti$_{Per}$/2, in which the value of the pressure is reduced by one half ("half-time"). The time constant $\tau$ of the PT1 filter is, for typical dosing periods, $\tau \approx$ 300-500ms (dosing frequency 2 Hz).

Note that the next dosing valve actuation (duty cycle or period) is determined some time before the physical actuation (beginning of dosing period). Additionally, it is (and can be) assumed that the external pressure is relatively stable over the dosing valve opening period (including the delay between pump actuation and dosing valve opening).

Next, determining (or modelling) of the average fluid (DEF) temperature over the time when the dosing valve is open, $\overline{T_m}$, will be explained in more detail. The average (DEF) temperature during dosing, typically, depends on several factors like the following: fluid (DEF) tank temperature, environment temperature (surrounding of suction line, pressure line), coolant temperature at dosing valve, valve tip temperature (catalyst upstream temperature), and dosing mass flow rate.

The model, typically, needs careful calibration of many parameters based on validation data (with instrumented dosing valve). However, it has turned out that, in SCR systems, the temperature conditions are quite stable and most of the parameters can be neglected while still achieving good (and sufficient) estimation accuracy (average temperature over certain periods). A pre-condition for such simplification is a continuous dosing.

The most influencing factor is the fluid (DEF) temperature in the tank (tank temperature) $T_{UTnkT}$ that scales the experimentally found stable point (application specific and different for upstream and downstream dosing valve). This results in

$$\overline{T_m} = k T_{m\text{-}cal.}$$

where: $k = f(T_{UTnkT})$ and $T_{m\text{-}cal}$ is the modeled (calculated) DEF temperature.

For applications where the simplified model is not accurate enough, a more complex model can be integrated, possibly including coil temperature measurement (plus corrections). Merging the information using a Kalman filter can be considered.

Next, determining (or modelling) of the average fluid (DEF) density, $\overline{\rho_m}$, will be explained in more detail. The fluid density can be estimated by using the previously described calculation of the average fluid (DEF) temperature. The average fluid density over the time when the dosing valve is open, $\overline{\rho_m}$, can be calculated based on the expected average fluid temperature $\overline{T_m}$ and an (average) concentration $\overline{w_m}$ (the concentration of urea in the solution; it is, thus, a composition of the fluid):

$$\overline{\rho_m} = f(\overline{T_m}) * f(\overline{w_m})$$

The calculation of the fluid density for various temperatures at constant concentration (mass concentration fraction) of $w_{DEF}$=32.5% (a value for typically used urea-water solutions) results in:

$$\rho_{DEF} = f(T_{DEF}) = 1.10001 - 0.000428345 * T_{DEF} - 0.00000162819 * T_{DEF}^2$$

Note that the temperature is in degree Celsius (°C).

The density as a function of temperature is mentioned above. The function of concentration shall be expressed as a factor based on experimental results, based on true density at 20°C. Correspondingly, the specific values in the formula above are experimentally obtained values for urea.

The function of concentration $f(\overline{w_m})$ can be expressed as a factor based on experimental results, based on true density at 20°C:

$$f(\overline{w_m}) = \frac{\rho_{\overline{m}}}{\rho_{w32.5}}$$

where: $\rho_{\overline{m}}$ =0.0029*$\overline{w_m}$ +0.995 (experimentally obtained values, as above).

Next, determining (or modelling) of the correction factor for a desired mass or amount of fluid (DEF) will be explained in more detail. The (final) calculation includes the average differential pressure over the time when the dosing valve is open, $\overline{\Delta p_m}$, and the average fluid density, $\overline{\rho_m}$, both as described above. The equation for the correction of desired amounts is the following one:

$$F_{corr,des} = f\left(\overline{\rho_m}, \overline{\Delta p_m}\right) = \sqrt{\frac{\overline{\rho_m} * \overline{\Delta p_m}}{\rho_{nom,} * \overline{\Delta p_{nom}}}}$$

The nominal differential pressure $\Delta p_{nom}$ and fluid (DEF) density $\rho_{nom}$ are valid at the conditions at which a nominal dosing valve flow rate ($Q_{stat}$) is defined. The nominal flow rate of a urea dosing valve, $\rho_{nom}$, can be measured with in new state with DEF at 23°C, thus:

$$\rho_{nom}=f(T_{23},w_{32.5})=1.08929675249 \; g/cm3$$

The nominal differential pressure $\Delta p_{nom}$ is the nominal system pressure, e.g.:

$$\Delta p_{nom}=9000 \; hPa$$

This allows an easy but very exact and efficient correction of a desired value of a mass or mass flow of fluid like DEF for determining current values of operating parameters when operating a fluid supply system. Such correction factor can also be used for correcting a dosed value of such mass or mass flow.

A processing unit according to the invention, e.g. a control device of a motor vehicle such as an engine control device or an exhaust gas after-treatment control device, is configured, in particular in terms of programming, to perform a method according to the invention.

The implementation of a method according to the invention in the form of a computer program or computer program product with program code for performing all method steps is advantageous, since this causes particularly low costs, especially if an executing processing device is also used for other tasks and is therefore available anyway. Finally, a machine-readable storage medium is provided with a computer program stored on it, as described above. Suitable storage media or data carriers for providing the computer program are, in particular, magnetic, optical and electrical memories, such as hard drives, flash memories, EEPROMs, DVDs, etc. A program can also be downloaded via computer networks (Internet, intranet, etc.). Such a download can be wired or wired or wireless (e.g. via a WLAN network, a 3G, 4G, 5G or 6G connection, etc.).

Further advantages and embodiments of the invention will become apparent from the description and the appended figures.

The invention is shown schematically in the figures on the basis of exemplary embodiments and will be described in the following, with reference to the figures.

Short Description of the Figures

Fig. 1     shows a fluid supply system, which can be operated by a method according to the invention.

Fig. 2     shows a flow diagram for a method according to the invention in a preferred embodiment.

Detailed Description

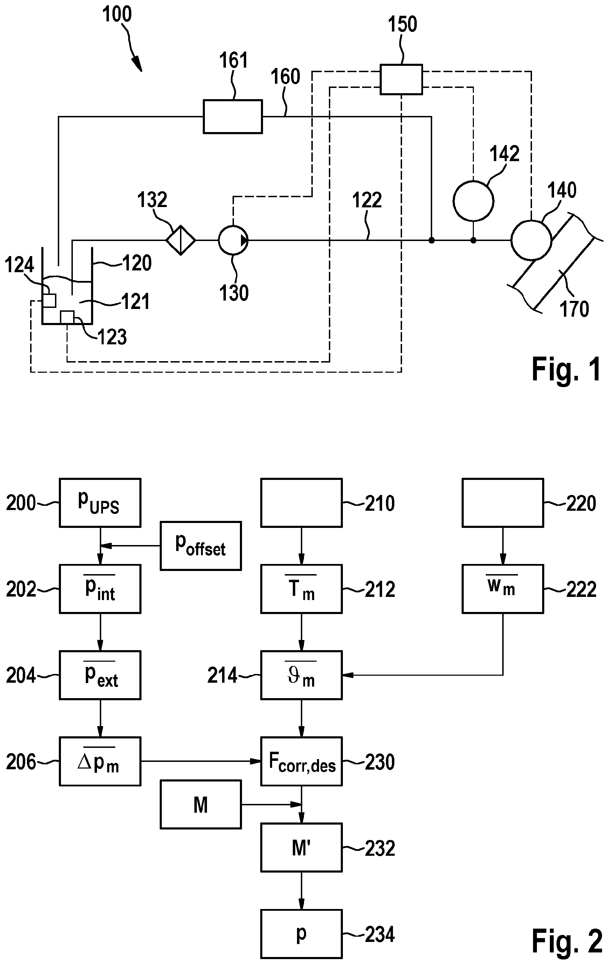

Fig. 1 schematically illustrates a fluid supply system 100, in particular in form of an SCR supply system, which can be operated by a method according to the invention. The SCR supply system 100 comprises a pump 130 with a filter 232. The pump 140 is configured to pump or convey a fluid like reducing agent 121 (e.g., a urea-water solution) from a fluid tank 120 via a pressure line 122 to a dosing module or valve 140. The fluid 121 is then, by means of the dosing valve 140, introduced or sprayed into an exhaust gas system 170 of an internal combustion engine.

Further, a pressure sensor 142 is provided (this can also be integrated in the pump) 130, which is configured to measure a pressure at least in the pressure line 122. A temperature sensor 123 is provided in the fluid tank 120 and an optional concentration sensor 124 is also provided in the fluid tank 120. A processing unit 150, in the form of an exhaust gas after-treatment control device, for example, is connected to the pressure sensor 142 and receives information about the pressure in the pressure line 122 from said sensor. The exhaust gas after-treatment control device is also connected to the temperature sensor 123 and to the concentration sensor 124. In addition, the exhaust gas after-treatment control device 150 is connected to the pump 130 and o the dosing valve 140 in order to control or operate the fluid (SCR) supply system 100.

In addition, the SCR supply system 100 includes, for example, a return line 160, through which the fluid can be fed back into the fluid tank 120. In this return line 160, an orifice or throttle 161 is arranged, for example, which offers a local flow resistance. It should be noted, however, that such a return can also be omitted in the case of a pump with actively controlled valves.

The exhaust gas after-treatment control device is configured to use relevant data, such as data received from an engine control unit (ECU) or from sensors for temperature, pressure and nitrogen oxide content in the exhaust gas, to operate the fluid (SCR) supply system 100 and, in particular, pump 130 and dosing valve 140, in order to supply the urea-water solution (fluid) 121 into the exhaust gas system 170 in front of an SCR catalytic converter.

Fig. 2 illustrates a method according to the invention in a preferred embodiment, i.e., operating a fluid (SCR) supply system like that of Fig. 1, by means of a flow diagram.

In a step 200, an actual (internal) pressure, $p_{UPS}$, in the supply lines is measured and, in step 202, an average value, $\overline{p_{int}}$, is determined by adding an offset pressure, $p_{offset}$, in order to reflect the level difference between the pressure sensor and the dosing valve. In step 204, an average external pressure, $\overline{p_{ext}}$ in the exhaust gas system is determined. Note that such external pressure may be considered very stable over time and, thus, does not need to be measured but a reference value can be used. Further, in step 206, an average differential pressure, $\overline{\Delta p_m}$, over the time when the dosing valve is opened, is determined according to $\overline{\Delta p_m} = \overline{p_{int}} - \overline{p_{ext}}$.

In a step 210, a temperature of the fluid tank is determined, e.g., several times and, in step 212, an average temperature, $\overline{T_m}$, over the time period the dosing valve is or will be opened, is determined. In step 214, an average density, $\overline{\rho_m}$, of the fluid is determined based on the average temperature. Optionally, in step 220, a concentration of the urea in the fluid (urea-water solution) can be measured by means of the respective sensor. In step 222, an average concentration, $\overline{w_m}$, can be determined, which can - in addition to the average temperature - be sued to determine the average density of the fluid (step 214).

In this way, an average average density, $\overline{\rho_m}$, of the fluid and an average differential pressure, $\overline{\Delta p_m}$, are determined, based on which (see step 230) the correction factor $F_{corr,des}$ for a desired value of a mass of fluid to be dosed into the exhaust gas system can be determined. In step 232, the desired value M of a mass of fluid to be dosed into the exhaust gas system is determined, such that a corrected desired value M' results. Based on that corrected desired value M', operating parameters P or their current values for operating the fluid supply system are determined, in step 234.

For further detailed and additional explanations and steps, it is referred to the detailed explanations above. In this way, a very accurate mass or mass flow of urea-water solution that is finally dosed into the exhaust gas system can be determined.

**Claims**

1. A method for operating a fluid supply system (100), said fluid supply system (100) comprising a fluid tank (120), pumping means (130) and a fluid dosing valve (140), said method comprising:

   operating said fluid supply system (100) according to current values of operating parameters (P), in order to pump a fluid (121) from said fluid tank (120) to said fluid dosing valve (140) and to dose said fluid (121), via said fluid dosing valve (140), into an exhaust gas system (170) of an engine,
   determining said current values of said operating parameters (P) based on a desired value (M) of a mass or mass flow of said fluid (121) to be dosed into said exhaust gas system (170),
   correcting the desired value (M) of said mass or mass flow or a dosed value of said mass or mass flow by determining and applying a correction factor ($F_{corr,des}$), wherein determining said correction factor comprises the steps:

   determining (214) a density ($\overline{\rho_m}$) of said fluid,
   determining (206) a differential pressure ($\overline{\Delta p_m}$) between an internal pressure ($\overline{p_{int}}$) of said fluid supply system (100) when said fluid dosing valve (140) is open, and an external pressure ($\overline{p_{ext}}$) of said exhaust gas system (170), and
   determining (230) said correction factor ($F_{corr,des}$) based on said density ($\overline{\rho_m}$) and on said differential pressure

$(\overline{\Delta p_m})$.

2. The method of claim 1, wherein determining (214) said density $(\overline{\rho_m})$ of said fluid (121) comprises:

   determining (212) a temperature $(\overline{T_m})$ of said fluid tank (120), and
   determining said density $(\overline{\rho_m})$ of said fluid based on said temperature $(\overline{T_m})$ of said fluid tank (120).

3. The method of claim 1 or 2, wherein determining (214) said density $(\overline{\rho_m})$ of said fluid (121) comprises:

   determining (222) a composition of said fluid (121), and
   determining said density $(\overline{\rho_m})$ of said fluid (121) based on said composition of said fluid (121).

4. The method of any one of the preceding claims, wherein determining (206) said differential pressure $(\overline{\Delta p_m})$.comprises adding an offset ($p_{offset}$) to a measured pressure value ($p_{UPS}$), wherein said offset, preferably, is based on a pressure loss between a position of a sensor (142) for measuring and a position of said dosing valve (140).

5. The method of any one of the preceding claims, wherein determining said current values of said operating parameters (P) based on a desired value (M) of a mass or mass flow of said fluid (121) to be dosed into said exhaust gas system (170) comprises determining current values of said operating parameters based on the corrected desired value (M') of a mass or mass flow of said fluid (121) to be dosed into said exhaust gas system (170).

6. The method of any one of the preceding claims, wherein correcting the desired value (M) of said mass or mass flow by determining and applying a correction factor ($F_{corr,des}$) comprises determining a new desired value of said mass or mass flow for another operating period based on the corrected dosed value of a mass or mass flow of said fluid (121) to be dosed into said exhaust gas system (170).

7. The method of any one of the preceding claims, wherein said fluid supply system (100) comprises or is a SCR fluid supply system, and wherein said fluid (121) comprises or is a urea-water solution.

8. A processing unit (150), configured to perform all method steps of the method of any one of the preceding claims.

9. A computer program, which causes a processing unit (150) to perform all method steps of the method of any one of claims 1 to 7, when executed on the processing unit (150).

10. A machine-readable storage medium with the computer program of claim 9 stored thereon.

100

161    160

124    120

121

132    122    150    142    140

130    123

170

**Fig. 1**

200  $p_{UPS}$    210    220

$p_{offset}$

202  $\overline{p_{int}}$    212  $\overline{T_m}$    222  $\overline{w_m}$

204  $\overline{p_{ext}}$    214  $\overline{\vartheta_m}$

206  $\overline{\Delta p_m}$    $F_{corr,des}$  230

M

M'  232

p  234

**Fig. 2**

Europäisches
Patentamt

European
Patent Office

Office européen
des brevets

# EUROPEAN SEARCH REPORT

Application Number

EP 21 18 7181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 212263 B3 (CONTINENTAL AUTOMOTIVE GMBH [DE]) 2 November 2017 (2017-11-02) * paragraph [0016] – paragraph [0029]; figure 1 * ----- | 1-10 | INV. F01N3/20 F01N9/00 |
| X | DE 10 2014 218088 A1 (BOSCH GMBH ROBERT [DE]) 10 March 2016 (2016-03-10) * paragraph [0029] – paragraph [0038]; figures 1,4 * ----- | 1-10 | |
| A | DE 198 18 448 A1 (SIEMENS AG [DE]) 28 October 1999 (1999-10-28) * column 5, line 2 – column 6, line 65; figure 1 * ----- | 1-10 | |

TECHNICAL FIELDS
SEARCHED     (IPC)

F01N

The present search report has been drawn up for all claims

| Place of search | Date of completion of the search | Examiner |
|---|---|---|
| Munich | 8 December 2021 | Zebst, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 7181

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2021

| Patent document cited in search report | Publication date | Patent family member(s) | Publication date |
|---|---|---|---|
| DE 102016212263 B3 | 02-11-2017 | CN 109415991 A | 01-03-2019 |
| | | DE 102016212263 B3 | 02-11-2017 |
| | | JP 6698935 B2 | 27-05-2020 |
| | | JP 2019521281 A | 25-07-2019 |
| | | KR 20190023104 A | 07-03-2019 |
| | | US 2019226376 A1 | 25-07-2019 |
| | | WO 2018007189 A1 | 11-01-2018 |
| DE 102014218088 A1 | 10-03-2016 | NONE | |
| DE 19818448 A1 | 28-10-1999 | AT 262973 T | 15-04-2004 |
| | | DE 19818448 A1 | 28-10-1999 |
| | | EP 1073509 A1 | 07-02-2001 |
| | | ES 2219046 T3 | 16-11-2004 |
| | | JP 2002513109 A | 08-05-2002 |
| | | KR 20010042986 A | 25-05-2001 |
| | | US 6442932 B1 | 03-09-2002 |
| | | WO 9955445 A1 | 04-11-1999 |

EPO FORM P0459

For more details about this annex : see Official Journal of the European Patent Office, No. 12/82